(19) Europäisches Patentamt
European Patent Office
Office européen des brevets

(11)  EP 2 519 036 B1

(12)  **EUROPEAN PATENT SPECIFICATION**

(45) Date of publication and mention
of the grant of the patent:
**28.03.2018  Bulletin 2018/13**

(21) Application number: **10838546.9**

(22) Date of filing: **11.06.2010**

(51) Int Cl.:
***H04W 4/06*** *(2009.01)*

(86) International application number:
**PCT/CN2010/073801**

(87) International publication number:
**WO 2011/075980 (30.06.2011 Gazette 2011/26)**

(54) **CLUSTER COMMUNICATION SYSTEM AND METHOD FOR TRANSMITTING BROADCAST MESSAGES THEREOF**

CLUSTER-KOMMUNIKATIONSSYSTEM UND VERFAHREN ZUM ÜBERTRAGEN VON RUNDFUNKNACHRICHTEN DARAUS

SYSTÈME DE COMMUNICATION EN GRAPPE ET PROCÉDÉ ASSOCIÉ POUR TRANSMETTRE DES MESSAGES DE RADIODIFFUSION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:  **24.12.2009  CN 200910261390**

(43) Date of publication of application:
**31.10.2012  Bulletin 2012/44**

(73) Proprietor: **ZTE Corporation
Shenzhen, Guangdong 518057 (CN)**

(72) Inventors:
• **TIAN, Wei
Guangdong 518057 (CN)**

• **WU, Juan
Guangdong 518057 (CN)**

(74) Representative: **D'Halleweyn, Nele Veerle Trees Gertrudis et al
Arnold & Siedsma
Bezuidenhoutseweg 57
2594 AC The Hague (NL)**

(56) References cited:
EP-A1- 1 916 852          WO-A1-2006/093379
WO-A1-2007/039494    WO-A1-2007/039494
CN-A- 1 829 340          CN-A- 101 426 175
CN-A- 101 453 789       US-A1- 2007 201 413
US-B1- 6 826 408

EP 2 519 036 B1

## Description

## Field of the Invention

The present invention relates to the communication field, and in particular to a cluster communication system and a method for transmitting broadcast messages thereof.

## Background of the Invention

The CDMA (Code Division Multiple Access) protocol provides that a paging channel is divided into paging time slots of 80ms, and a plurality of paging time slots constitute one broadcast period. One broadcast period has $B+3$ paging time slots, and the first time slot in the broadcast period is a broadcast time slot. A calculation formula of B is as following:

$$B=2^{i}\times 16,$$

wherein $i$ is a broadcast period index.

An important manner of transmitting messages of a cluster system is transmitting messages in the broadcast time slot of the broadcast period of the paging channel. A cluster terminal receives the broadcast messages transmitted from a base station by monitoring the broadcast time slot in the broadcast period. For example, all of periodic paging messages of the cluster system need to be transmitted to the cluster terminal using the broadcast time slot of the paging channel. However, with the development of the cluster network and the continuous increasing of the groups, each group needs to transmit messages to a home terminal of the group using the broadcast time slot in the broadcast period. The broadcast time slot of the paging channel cannot bear the heavy load any more, as the quantity of the transmitted messages of the broadcast time slot continuously increases. When a plurality of groups make calls simultaneously, broadcast messages of the plurality of groups cannot be timely transmitted in the broadcast time slot, so that usually message congestion will be caused and the network communication quality cannot be assured.

According to the CDMA2000 protocol, the paging channel at most transmits 9600*0.08=768 bits in each time slot (including broadcast time slot), when the paging channel is divided in a manner that the rate is 9600bit/second and every 80ms is a time slot. Each time slot of the paging channel at most can transmit 768 bits, but the paging time slots also need to bear the transmission of overhead messages and some other corresponding indicator bits. Thus, the bits reserved for transmission of the broadcast messages are even less than 768 bits. With the continuous increasing of users of the cluster network and the groups, the groups simultaneously making calls will be counted by the hundreds, while the capacity of the broadcast time slot of the paging channel is limited. Then, how to satisfy the requirement of transmitting the broadcast messages in the broadcast time slot when a plurality of groups exist at the same time becomes one of the important problems that urgently need to be solved to improve the cluster system performance.

At present, one method is to prolong the period of transmitting the cluster paging broadcast messages to decrease as much as possible the quantity of the broadcast messages of the paging channel transmitted in the broadcast time slot and to reduce the load of the broadcast time slot. However, with the increasing of the network scale and the increasing of the groups, the broadcast messages of the paging channel still will be continuously increased, and the message congestion will inevitably affect the cluster system. Therefore, this method cannot fundamentally solve the problem of satisfying the requirement of transmitting the broadcast messages in the broadcast time slot when a plurality of groups exist at the same time. Moreover, the connectivity requirement of the cluster system does not allow a too long delay of the broadcast messages.

Patent documents WO2007/039494 and US2007/201413 provide respective technical solutions; however, the above mentioned problem still remains unsolved.

## Summary of the Invention

The present invention provides a cluster communication system and a method for transmitting broadcast messages thereof to at least solve the above problems.

A method for transmitting broadcast messages of a cluster communication system is provided according to one aspect of the present invention, comprising: when it is determined that broadcast messages to be transmitted to a terminal cannot be transmitted completely in one time slot, a base station transmitting the broadcast messages in a plurality of continuous time slots, and transmitting in each of the plurality of time slots information indicating whether the terminal continues to monitor a next time slot; the terminal determining whether to continue to monitor the next time slot according to the information received; and if a determination result is to continue to monitor, the terminal continuing to monitor the next time slot till all the broadcast messages to be received are received.

Preferably, the information is a first indicator field in a broadcast paging message, and is used for indicating the terminal receiving the broadcast paging message in a broadcast time slot to continue to monitor the next time slot when the value of the first indicator field is a predetermined value.

Preferably, when it is determined that the broadcast messages to be transmitted to the terminal cannot be transmitted completely in one time slot, the base station transmitting the broadcast messages in the plurality of continuous time slots, and transmitting in each of the plurality of time slots information indicating whether the terminal continues to monitor the next time slot comprise: the base station setting the first indicator field in the broadcast paging message to be the predetermined value when it is determined that the broadcast messages to be transmitted to the terminal cannot be transmitted completely in one broadcast time slot; and the base station transmitting the broadcast paging message to the terminal.

Preferably, if a determination result is to continue to monitor, the terminal continuing to monitor the next time slot till all the broadcast messages to be received are received comprises: the terminal receiving the broadcast paging message in the broadcast time slot; the terminal determining that the value of the first indicator field carried in the broadcast paging message is the predetermined value; and the terminal continuing to monitor a time slot next to the broadcast time slot after monitoring the broadcast time slot, and continuing to receive the broadcast messages transmitted from the base station in the time slot next to the broadcast time slot.

Preferably, the information is a first indicator field and a second indicator field in a broadcast paging message, and is used for indicating the terminal receiving the broadcast paging message in a broadcast time slot to continue to monitor the next time slot when the value of the first indicator field is a first predetermined value; and is used for indicating the terminal receiving the broadcast paging message in an allocated time slot to continue to monitor the next time slot when the value of the second indicator field is a second predetermined value.

Preferably, when it is determined that the broadcast messages to be transmitted to the terminal cannot be transmitted completely in one time slot, the base station transmitting the broadcast messages in the plurality of continuous time slots, and transmitting in each of the plurality of time slots information indicating whether the terminal continues to monitor the next time slot comprise: when it is determined that the broadcast messages to be transmitted to the terminal cannot be transmitted completely in one broadcast time slot, the base station setting the first indicator field in the broadcast paging message to be the first predetermined value, and transmitting the broadcast paging message to the terminal; and when it is determined that the broadcast messages to be transmitted to the terminal cannot be transmitted completely in one allocated time slot, the base station setting the second indicator field in the broadcast paging message to be the second predetermined value, and transmitting the broadcast paging message to the terminal.

Preferably, the terminal continuing to monitor the next time slot according to the indicator fields in the broadcast message received till all the broadcast messages are received comprises: when the terminal receives the broadcast paging message in the broadcast time slot, the terminal determining that the value of the first indicator field carried in the broadcast paging message is the first predetermined value, then the terminal continuing to monitor a time slot next to the broadcast time slot after monitoring the broadcast time slot, and continuing to receive the broadcast messages transmitted from the base station in the time slot next to the broadcast time slot; and when the terminal receives the broadcast paging message in the allocated time slot, the terminal determining the value of the second indicator field carried in the broadcast paging message to be the second predetermined value, then the terminal continuing to monitor a time slot next to the allocated time slot after monitoring the allocated time slot, and continuing to receive the broadcast messages transmitted from the base station in the time slot next to the allocated time slot.

A cluster communication system is provided according to the other aspect of the present invention, comprising: a base station configured to, when it is determined that broadcast messages to be transmitted to a terminal cannot be transmitted completely in one time slot, transmit the broadcast messages in a plurality of continuous time slots, and transmit in each of the plurality of time slots information indicating whether the terminal continues to monitor a next time slot; and the terminal configured to determine whether to continue to monitor the next time slot according to the information received, and further configured to if a determination result is to continue to monitor, continue to monitor the next time slot till all the broadcast messages to be received are received.

Preferably, the information is a first indicator field in a broadcast paging message, and is used for indicating the terminal receiving the broadcast paging message in a broadcast time slot to continue to monitor the next time slot when the value of the first indicator field is a predetermined value.

Preferably, the base station comprises: a setting module configured to set the first indicator field in the broadcast paging message to be the predetermined value when it is determined that the broadcast messages to be transmitted to the terminal cannot be transmitted completely in one broadcast time slot; and a transmitting module configured to transmit the broadcast paging message to the terminal.

The terminal comprises: a receiving module configured to receive the broadcast paging message in the broadcast time slot, and further configured to, when a determination module determines that the value of the first indicator field carried in the broadcast paging message is the predetermined value, continue to monitor a time slot next to the broadcast time slot after monitoring the broadcast time slot, and continue to receive the broadcast messages transmitted from the base station in the time slot next to the broadcast time slot; and the determination module configured to determine whether the value of the first indicator field carried in the broadcast paging message is the predetermined value.

With the present invention, a cluster terminal is indicated whether to continue to monitor the next time slot by extending the field in the broadcast paging message in the cluster system. When the messages to be transmitted from the base station to the cluster terminal cannot be transmitted completely in one time slot, the extended field of the broadcast paging message can be used to indicate the terminal to continue to monitor the paging channel in the next time slot, and to receive the paging channel messages. It solves the problem in the related art that the requirement of transmitting the broadcast messages in the broadcast time slot when a plurality of groups exist at the same time cannot be satisfied fundamentally. Thus, the broadcast messages of the paging channel can be transmitted in a plurality of continuous time slots, and the terminal monitors the broadcast messages in the plurality of time slots, which achieves an object of improving the transmitting capacity of the broadcast messages on the paging channel in the cluster system.

**Brief Description of the Drawings**

The drawings illustrated here provide a further understanding of the present invention and form a part of the present application. The exemplary embodiments and the descriptions thereof are used to explain the present invention without unduly limiting the scope of the present invention. In the drawings:

Fig. 1 is a flow chart of a method for transmitting broadcast messages of a cluster system according to the embodiments of the present invention; and

Fig. 2 is a schematic diagram of a cluster system according to the embodiments of the present invention.

**Detailed Description of Embodiments**

The present invention will be illustrated in detail hereinafter with reference to the drawings and in conjunction with embodiments. It should be noted that the embodiments and features therein of the present application can be combined with each other if no conflict is caused.

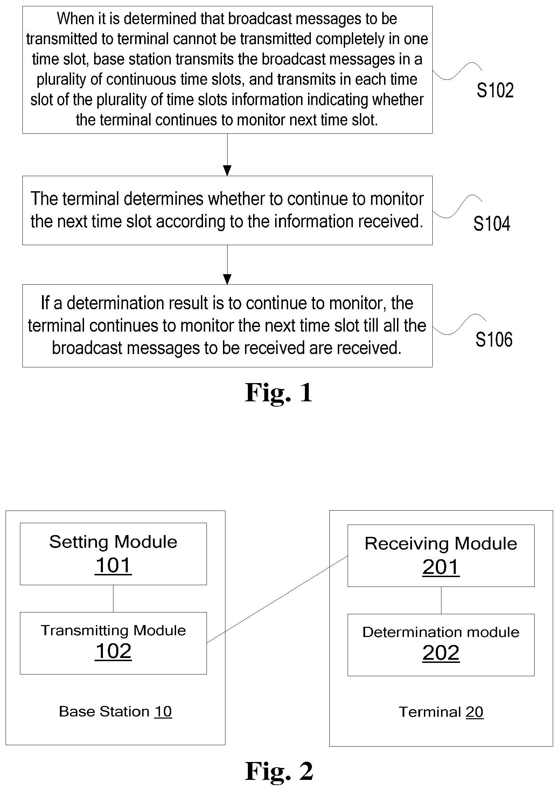

Fig. 1 is a flow chart of a method for transmitting broadcast messages of a cluster communication system according to the embodiments of the present invention, comprising the following steps.

Step S102: when it is determined that broadcast messages to be transmitted to a terminal cannot be transmitted completely in one time slot, a base station transmits the broadcast messages in a plurality of continuous time slots, and transmits, in each time slot of the plurality of time slots, information indicating whether the terminal continues to monitor a next time slot.

Step S104: the terminal determines whether to continue to monitor the next time slot according to the information received.

Step S106: if a determination result is to continue to monitor, the terminal continues to monitor the next time slot till all the broadcast messages to be received are received.

In this embodiment, a cluster terminal is indicated whether to continue to monitor the next time slot by extending the field in the broadcast paging message in the cluster system. When the messages to be transmitted from the base station to the cluster terminal cannot be transmitted completely in one time slot, the extended field of the broadcast paging message can be used to indicate the terminal to continue to monitor the paging channel in the next time slot, and to receive the paging channel messages. It solves the problem in the related art that the requirement of transmitting the broadcast messages in the broadcast time slot when a plurality of groups exist at the same time cannot be satisfied fundamentally. Thus, the broadcast messages of the paging channel can be transmitted in a plurality of continuous time slots, and the terminal monitors the broadcast messages in the plurality of time slots, which achieves an object of improving the transmitting capacity of the broadcast messages on the paging channel in the cluster system.

In addition, under the precondition of being capable of assuring the connectivity of the cluster system, this embodiment enables the base station to timely transmit more broadcast messages, and achieves the object of improving the transmitting capacity of the broadcast messages of the cluster system.

Preferably, the information indicating whether the terminal continues to monitor the next time slot is a first indicator field in the broadcast paging message, and is used for indicating the terminal receiving the broadcast paging message in the broadcast time slot to continue to monitor the next time slot when a value of the first indicator field is a predetermined value.

Preferably, step S102 comprises: the base station setting the first indicator field in the broadcast paging message to be the predetermined value when it is determined that the broadcast messages to be transmitted to the terminal cannot be transmitted completely in one broadcast time slot; and the base station transmitting the broadcast paging message to the terminal.

Step S106 comprises: the terminal receiving the broadcast paging message in the broadcast time slot; the terminal determining that the value of the first indicator field carried in the broadcast paging message is the predetermined value; and the terminal continuing to monitor a time slot next to the broadcast time slot after monitoring the broadcast time slot, and continuing to receive the broadcast messages transmitted from the base station in the time slot next to the broadcast time slot.

The preferred embodiment above provides a specific implementing solution of the method for transmitting broadcast messages of a cluster system.

Preferably, the information indicating whether the terminal continues to monitor the next time slot is a first indicator field and a second indicator field in the broadcast paging message, is used for indicating a terminal receiving the broadcast paging message in a broadcast time slot to continue to monitor a next time slot when a value of the first indicator field is a first predetermined value; and is used for indicating a terminal receiving the broadcast paging message in an allocated time slot to continue to monitor a next time slot when a value of the second indicator field is a second predetermined value.

Preferably, step S102 comprises: when it is determined that the broadcast messages to be transmitted to the terminal cannot be transmitted completely in one broadcast time slot, the base station setting the first indicator field in the broadcast paging message to be the first predetermined value, and transmitting the broadcast paging message to the terminal; and when it is determined that the broadcast messages to be transmitted to the terminal cannot be transmitted completely in one allocated time slot, the base station setting the second indicator field in the broadcast paging message to be the second predetermined value, and transmitting the broadcast paging message to the terminal.

Step S106 comprises: when the terminal receives the broadcast paging message in the broadcast time slot, the terminal determining that the value of the first indicator field carried in the broadcast paging message is the first predetermined value, and then the terminal continuing to monitor the time slot next to the broadcast time slot after monitoring the broadcast time slot, and continuing to receive the broadcast messages transmitted from the base station in the time slot next to the broadcast time slot; and when the terminal receives the broadcast paging message in the allocated time slot, the terminal determining the value of the second indicator field carried in the broadcast paging message to be the second predetermined value, and then the terminal continuing to monitor the time slot next to the allocated time slot after monitoring the allocated time slot, and continuing to receive the broadcast messages transmitted from the base station in the time slot next to the allocated time slot.

The preferred embodiment above provides another specific implementing solution of the method for transmitting the broadcast messages of a cluster system.

Fig. 2 is a schematic diagram of a cluster system according to the embodiments of the present invention. The cluster system comprises:

a base station 10, configured to, when it is determined that broadcast messages to be transmitted to a terminal cannot be transmitted completely in one time slot, transmit the broadcast messages in a plurality of continuous time slots, and transmit in each time slot of the plurality of time slots information indicating whether the terminal continues to monitor a next time slot; and

a terminal 20, configured to determine whether to continue to monitor the next time slot according to the information received; and further configured to if a determination result is to continue to monitor, continue to monitor the next time slot till all the broadcast messages to be received are received.

Preferably, the information indicating whether the terminal continues to monitor the next time slot is a first indicator field in a broadcast paging message, and is used for indicating a terminal receiving the broadcast paging message in a broadcast time slot to continue to monitor the next time slot when the value of the first indicator field is a predetermined value.

The base station 10 comprises: a setting module 101 configured to set the first indicator field in the broadcast paging message to be the predetermined value when it is determined that the broadcast messages to be transmitted to the terminal 20 cannot be transmitted completely in one time slot; and a transmitting module 102 configured to transmit the broadcast paging message to the terminal 20.

The terminal 20 comprises: a receiving module 201, configured to receive the broadcast paging message in the broadcast time slot, and further configured to, when a determination module 202 determines that the value of the first indicator field carried in the broadcast paging message is the predetermined value, continue to monitor a time slot next to the broadcast time slot after monitoring the broadcast time slot, and continue to receive the broadcast messages transmitted from the base station in the time slot next to the broadcast time slot; and the determination module 202 configured to determine whether the value of the first indicator field carried in the broadcast paging message is the predetermined value.

Preferably, the information indicating whether the terminal continues to monitor the next time slot is a first indicator field and a second indicator field in the broadcast paging message, and is used for indicating the terminal receiving the broadcast paging message in the broadcast time slot to continue to monitor the next time slot when a value of the first indicator field is a first predetermined value; and the terminal receiving the broadcast paging message in an allocated time slot is indicated to continue to monitor the next time slot when a value of the second indicator field is a second predetermined value.

Preferably, the setting module 101 is further configured to set the first indicator field in broadcast paging message to be the first predetermined value when it is determined that the broadcast messages to be transmitted to the terminal 20 cannot be transmitted completely in one broadcast time slot, and further configured to set the second indicator field in the broadcast paging message to be the second predetermined value when it is determined that the broadcast messages to be transmitted to the terminal cannot be transmitted completely in an allocated time slot; and the transmitting module 102 is further configured to transmit the broadcast paging messages to the terminal 20.

The determination module 202 is further configured to determine whether the value of the first indicator field carried in the broadcast paging message is the first predetermined value when the receiving module 201 receives the broadcast paging message in the broadcast time slot; and to determine whether the value of the second indicator field carried in the broadcast paging message is the second predetermined value when the receiving module 201 receives the broadcast paging message in the allocated time slot; and the receiving module 201 is further configured to, in a situation that the determination module 202 determines that the value of the first indicator field carried in the broadcast paging message is the first predetermined value, continue to monitor a time slot next to the broadcast time slot after monitoring the broadcast time slot and continue to receive the broadcast massages transmitted from the base station in the time slot next to the broadcast time slot, and configured to, in a situation that the determination module 202 determines that the value of the second indicator field carried in the broadcast paging message is the second predetermined value, continue to monitor a time slot next to the allocated time slot after monitoring the allocated time slot, and continue to receive the broadcast messages transmitted from the base station in the time slot next to the allocated time slot.

Preferred Embodiment 1

Specifically, a field in a broadcast paging message in a cluster call (cluster call broadcast paging message) is extended as shown in Table 1:

Table 1

| Field | Length(bits) |
|---|---|
| READ_NEXT_SLOT_BCAST | 1 |

Specifically, READ_NEXT_SLOT_BCAST indicates whether the terminal receiving the broadcast paging message in the broadcast time slot continues to monitor the time slot next to the broadcast time slot. READ_NEXT_SLOT_BCAST is set to be 1 if the terminal is required to continue to monitor the time slot next to the broadcast time slot; and READ_NEXT_SLOT_BCAST is set to be 0 if the terminal is not required to continue to monitor the time slot next to the broadcast time slot.

A specific processing flow comprises processing at the two sides of a base station side and a terminal side.

(1) Processing at the base station side

The field READ_NEXT_SLOT_BCAST in the broadcast paging message is set to be 1 if the broadcast messages transmitted from the base station to a cluster terminal cannot be transmitted completely in one broadcast time slot; and the field READ_NEXT_SLOT_BCAST in the broadcast paging message is set to be 0 if the broadcast messages transmitted from the base station to the cluster terminal can be transmitted completely in one broadcast time slot.

(2) Processing at the terminal side

The terminal determines the field READ_NEXT_SLOT_BCAST carried in the broadcast paging message after receiving the broadcast paging message in the broadcast time slot; if the value of the field READ_NEXT_SLOT_BCAST is 1, the terminal still needs to continue to monitor the time slot next to the broadcast time slot after monitoring the broadcast time slot of the paging channel and continue to receive the messages transmitted from the base station in the time slot next to the broadcast time slot.

The terminal determines the field READ_NEXT_SLOT_BCAST carried in the broadcast paging message after receiving the broadcast paging message in the broadcast time slot; if the value of the field READ_NEXT_SLOT_BCAST is 0, the terminal enters a dormancy state after monitoring the broadcast time slot of the paging channel, and continues to monitor when it comes to a next broadcast time slot or an allocated time slot.

Preferred Embodiment 2

The base station not only can indicate the terminal to continue to monitor the next time slot next to the broadcast time slot, but also for the time slot allocated by the terminal, the base station can indicate the terminal to continue to monitor a time slot next to the allocated time slot. With the continuous extension of the protocol and the continuous increasing of the message contents, the terminal also can be indicated to continue to monitor the time slot next to the allocated time slot when the paging messages cannot be transmitted completely in one time slot allocated by the terminal. Specifically, the fields in a broadcast paging message in a cluster call (cluster call broadcast paging message) are extended as shown in Table 2:

Table 2

| Field | Length(bits) |
|---|---|
| READ_NEXT_SLOT | 1 |
| READ_NEXT_SLOT_BCAST | 1 |

In the above, READ_NEXT_SLOT indicates whether the terminal receiving the broadcast paging message in the allocated time slot continues to monitor the time slot next to the allocated time slot. READ_NEXT_SLOT is set to be 1 if the terminal is required to continue to monitor the time slot next to the allocated time slot; and READ_NEXT_SLOT is set to be 0 if the terminal is not required to continue to monitor the time slot next to the allocated time slot.

READ_NEXT_SLOT_BCAST indicates whether the terminal receiving the broadcast paging message in the broadcast time slot continues to monitor the time slot next to the broadcast time slot. READ_NEXT_SLOT_BCAST is set to be 1 if the terminal is required to continue to monitor the time slot next to the broadcast time slot; and READ_NEXT_SLOT_BCAST is set to be 0 if the terminal is not required to continue to monitor the time slot next to the broadcast time slot.

A specific processing flow comprises processing at the two sides of a base station side and a terminal side.

(1) Processing at the base station side

The field READ_NEXT_SLOT in the broadcast paging message is set to be 1 if the broadcast messages transmitted from the base station to a terminal cannot be transmitted completely in one allocated time slot; and the field READ_NEXT_SLOT in the broadcast paging message is set to be 0 if the broadcast messages transmitted from the base station to a cluster terminal can be transmitted completely in one allocated time slot.

The field READ_NEXT_SLOT_BCAST in the broadcast paging message is set to be 1 if the broadcast messages transmitted from the base station to the cluster terminal cannot be transmitted completely in one broadcast time slot; and the field READ_NEXT_SLOT_BCAST in the broadcast paging message is set to be 0 if the broadcast messages transmitted from the base station to the cluster terminal can be transmitted completely in one broadcast time slot.

(2) Processing at the terminal side

The terminal determines the field READ_NEXT_SLOT carried in the broadcast paging message after receiving the broadcast paging message in the allocated time slot. If the value of the field READ_NEXT_SLOT is 1, the terminal still needs to continue to monitor the time slot next to the allocated time slot after monitoring the allocated time slot of the paging channel, and continue to receive the messages transmitted from the base station in the time slot next to the allocated time slot.

The terminal determines the field READ_NEXT_SLOT carried in the broadcast paging message after receiving the broadcast paging message in the allocated time slot. If the value of the field READ_NEXT_SLOT is 0, the terminal enters a dormancy state after monitoring the allocated time slot of the paging channel, and continues to monitor when it comes to a next allocated time slot or a broadcast time slot.

The terminal determines the field READ_NEXT_SLOT_BCAST carried in the broadcast paging message after receiving the broadcast paging message in the broadcast time slot. If the value of the field READ_NEXT_SLOT_BCAST is 1, the terminal still needs to continue to monitor the time slot next to the broadcast time slot after monitoring the broadcast time slot of the paging channel and continue to receive the messages transmitted from the base station in the time slot next to the broadcast time slot.

The terminal determines the field READ_NEXT_SLOT_BCAST carried in the broadcast paging message after receiving the broadcast paging message in the broadcast time slot. If the value of the field READ_NEXT_SLOT_BCAST is 0, the terminal enters a dormancy state after monitoring the broadcast time slot of the paging channel, and continues to monitor when it comes to a next broadcast time slot or an allocated time slot.

In addition, it should be noted that a message that needs to continue to be transmitted in the next time slot should be ensured to have the same transmission priority as if the message is transmitted in the current time slot.

As can be seen from the above description, the present invention realizes the following technical effects:

(1) the problem of transmitting the broadcast messages of the paging channel in a cluster system can be solved in a situation that a cluster network scale is continuously enlarged, the groups are continuously increased, a transmitting quantity of the broadcast messages of the paging channel continuously rises, and the broadcast time slot of the paging channel cannot satisfy the requirement of transmitting the broadcast messages of a plurality of groups;

(2) the base station can transmit the broadcast messages of the paging channel in a plurality of continuous time slots, and the terminal monitors the broadcast messages in a plurality of time slots, which achieves the object of improving the transmitting capacity of the broadcast messages on the paging channel in the cluster system; and

(3) under the precondition of assuring the connectivity of the cluster system, the base station can be enabled to timely transmit more broadcast messages, which achieves the object of improving the transmitting capacity of the broadcast messages in the cluster system.

Apparently, those skilled in the art should understand that each module or each step in the present invention can be realized by the general calculating apparatus. They can be collectedly implemented in a single calculating apparatus or distributed in the network formed by a plurality of calculating apparatus. Optionally, they can be realized by the program codes executable by the calculating apparatus. Therefore, they can be stored in the storing apparatus to be executed by the calculating apparatus. In some cases, the steps shown or described can be executed in an order different from that herein. Or, they can be fabricated into integrated circuit modules, respectively, or a plurality of modules or steps therein are fabricated into individual integrated circuit module for the accomplishment. Thus, the present invention is not limited to the combination of any particular hardware and software.

**Claims**

1. A method for transmitting broadcast messages of a cluster communication system, **characterized by** comprising:

    when it is determined that broadcast messages to be transmitted to a terminal cannot be transmitted completely in one time slot, a base station transmitting the broadcast messages in a plurality of continuous time slots, and transmitting, in each of the plurality of time slots, information indicating whether the terminal continues to monitor a next time slot (S102);
    the terminal determining whether to continue to monitor the next time slot according to the information received (S104); and
    if a determination result is to continue to monitor, the terminal continuing to monitor the next time slot till all the broadcast messages to be received are received (S106).

2. The method according to claim 1, **characterized in that** the information is a first indicator field in a broadcast paging message, and is used for indicating the terminal receiving the broadcast paging message in a broadcast time slot to continue to monitor the next time slot when the value of the first indicator field is a predetermined value.

3. The method according to claim 2, **characterized in that** when it is determined that the broadcast messages to be transmitted to the terminal cannot be transmitted completely in one time slot, the base station transmitting the broadcast messages in the plurality of continuous time slots, and transmitting, in each of the plurality of time slots, information indicating whether the terminal continues to monitor the next time slot comprises:

    the base station setting the first indicator field in the broadcast paging message to be the predetermined value when it is determined that the broadcast messages to be transmitted to the terminal cannot be transmitted completely in one broadcast time slot; and
    the base station transmitting the broadcast paging message to the terminal.

4. The method according to claim 3, **characterized in that** if a determination result is to continue to monitor, the terminal continuing to monitor the next time slot till all the broadcast messages to be received are received comprises:

    the terminal receiving the broadcast paging message in the broadcast time slot;
    the terminal determining that the value of the first indicator field carried in the broadcast paging message is the predetermined value; and
    the terminal continuing to monitor a time slot next to the broadcast time slot after monitoring the broadcast time slot, and continuing to receive the broadcast messages transmitted from the base station in the time slot next to the broadcast time slot.

5. The method according to claim 1, **characterized in that** the information is a first indicator field and a second indicator field in a broadcast paging message, and is used for indicating the terminal receiving the broadcast paging message in a broadcast time slot to continue to monitor the next time slot when the value of the first indicator field is a first predetermined value; and is used for indicating the terminal receiving the broadcast paging message in an allocated time slot to continue to monitor the next time slot when the value of the second indicator field is a second predetermined value

6. The method according to claim 5, **characterized in that** when it is determined that the broadcast messages to be transmitted to the terminal cannot be transmitted completely in one time slot, the base station transmitting the broadcast messages in the plurality of continuous time slots, and transmitting in each of the plurality of time slots information indicating whether the terminal continues to monitor the next time slot comprises:

    when it is determined that the broadcast messages to be transmitted to the terminal cannot be transmitted completely in one broadcast time slot, the base station setting the first indicator field in the broadcast paging message to be the first predetermined value, and transmitting the broadcast paging message to the terminal; and
    when it is determined that the broadcast messages to be transmitted to the terminal cannot be transmitted completely in one allocated time slot, the base station setting the second indicator field in the broadcast paging message to be the second predetermined value, and transmitting the broadcast paging message to the terminal.

7. The method according to claim 6, **characterized in that** the terminal continuing to monitor the next time slot according to the indicator fields in the broadcast message received till all the broadcast messages are received comprises:

when the terminal receives the broadcast paging message in the broadcast time slot, the terminal determining that the value of the first indicator field carried in the broadcast paging message is the first predetermined value, then the terminal continuing to monitor a time slot next to the broadcast time slot after monitoring the broadcast time slot, and continuing to receive the broadcast messages transmitted from the base station in the time slot next to the broadcast time slot; and

when the terminal receives the broadcast paging message in the allocated time slot, the terminal determining the value of the second indicator field carried in the broadcast paging message to be the second predetermined value, then the terminal continuing to monitor a time slot next to the allocated time slot after monitoring the allocated time slot, and continuing to receive the broadcast messages transmitted from the base station in the time slot next to the allocated time slot.

8. A cluster communication system, **characterized by** comprising:

a base station (10), configured to, when it is determined that broadcast messages to be transmitted to a terminal cannot be transmitted completely in one time slot, transmit the broadcast messages in a plurality of continuous time slots, and transmit, in each of the plurality of time slots, information indicating whether the terminal continues to monitor a next time slot; and

the terminal (20), configured to determine whether to continue to monitor the next time slot according to the information received, and further configured to if a determination result is to continue to monitor, continue to monitor the next time slot till all the broadcast messages to be received are received.

9. The cluster communication system according to claim 8, **characterized in that** the information is a first indicator field in a broadcast paging message, and is used for indicating the terminal receiving the broadcast paging message in a broadcast time slot to continue to monitor the next time slot when the value of the first indicator field is a predetermined value.

10. The cluster communication system according to claim 9, **characterized in that** the base station comprises: a setting module (101), configured to set the first indicator field in the broadcast paging message to be the predetermined value when it is determined that the broadcast messages to be transmitted to the terminal cannot be transmitted completely in one broadcast time slot; and a transmitting module (102), configured to transmit the broadcast paging message to the terminal; and the terminal comprises: a receiving module (201), configured to receive the broadcast paging message in the broadcast time slot, and further configured to, when a determination module determines that the value of the first indicator field carried in the broadcast paging message is the predetermined value, continue to monitor a time slot next to the broadcast time slot after monitoring the broadcast time slot, and continue to receive the broadcast messages transmitted from the base station in the time slot next to the broadcast time slot; and the determination module (202), configured to determine whether the value of the first indicator field carried in the broadcast paging message is the predetermined value.

**Patentansprüche**

1. Verfahren zur Übertragung von Rundfunknachrichten in einem Cluster-Kommunikationssystem, **dadurch gekennzeichnet, dass** das Verfahren umfasst:

wenn festgestellt wird, dass an ein Endgerät zu übertragende Rundfunknachrichten nicht vollständig in einem Zeitfenster übertragen werden können, Übertragen, durch eine Basisstation, der Rundfunknachrichten in einer Mehrzahl von aufeinander folgenden Zeitfenstern, und Übertragen, in jedem aus der Mehrzahl von Zeitfenstern, von Informationen, die anzeigen, ob das Endgerät weiterhin ein nächstes Zeitfenster überwacht (S102);
Feststellen, durch das Endgerät, ob das nächste Zeitfenster weiterhin überwacht werden soll, gemäß den empfangenen Informationen (S104); und
wenn das Ergebnis der Feststellung lautet, dass weiterhin überwacht werden soll, weiterhin Überwachen, durch das Endgerät, des nächsten Zeitfensters so lange, bis alle zu empfangenden Rundfunknachrichten empfangen worden sind (S106).

2. Verfahren gemäß Anspruch 1, **dadurch gekenn-**

**zeichnet, dass** es sich bei der Information um ein erstes Anzeigefeld in einer Rundfunk-Paging-Nachricht handelt, und dass die Information verwendet wird, um dem Endgerät, welches die Rundfunk-Paging-Nachricht in einem Rundfunkzeitfenster empfängt, anzuzeigen, dass das nächste Zeitfenster weiterhin überwacht werden soll, wenn es sich bei dem Wert des ersten Anzeigefeldes um einen vorbestimmten Wert handelt.

3. Verfahren gemäß Anspruch 2, **dadurch gekennzeichnet, dass** wenn festgestellt wird, dass die an das Endgerät zu übertragenden Rundfunknachrichten nicht vollständig in einem Zeitfenster übertragen werden können, das Übertragen, durch die Basisstation, der Rundfunknachrichten in einer Mehrzahl von aufeinander folgenden Zeitfenstern, und das Übertragen, in jedem aus der Mehrzahl von Zeitfenstern, von Informationen, die anzeigen, ob das Endgerät weiterhin ein nächstes Zeitfenster überwacht, umfassen:

> Einstellen, durch die Basisstation, des ersten Anzeigefeldes in der Rundfunk-Paging-Nachricht derart, dass es sich um den vorbestimmten Wert handelt, wenn festgestellt wird, dass die an das Endgerät zu übertragenden Rundfunknachrichten nicht vollständig in einem Rundfunkzeitfenster übertragen werden können; und
> Übertragen, durch die Basisstation, der Rundfunk-Paging-Nachricht an das Endgerät.

4. Verfahren gemäß Anspruch 3, **dadurch gekennzeichnet, dass** wenn das Ergebnis der Feststellung lautet, dass weiterhin überwacht werden soll, das weiterhin Überwachen, durch das Endgerät, des nächsten Zeitfensters so lange, bis alle zu empfangenden Rundfunknachrichten empfangen worden sind, umfasst:

> Empfangen, durch das Endgerät, der Rundfunk-Paging-Nachricht in dem Rundfunkzeitfenster;
> Feststellen, durch das Endgerät, ob es sich bei dem Wert des in der Rundfunk-Paging-Nachricht enthaltenen ersten Anzeigefeldes um den vorbestimmten Wert handelt; und
> weiterhin Überwachen, durch das Endgerät, eines Zeitfensters nach dem Rundfunkzeitfenster nach der Überwachung des Rundfunkzeitfensters, und weiterhin Empfangen der von der Basisstation übertragenen Rundfunknachrichten in dem Zeitfenster nach dem Rundfunkzeitfenster.

5. Verfahren gemäß Anspruch 1, **dadurch gekennzeichnet, dass** es sich bei der Information um ein erstes Anzeigefeld und ein zweites Anzeigefeld in einer Rundfunk-Paging-Nachricht handelt, und dass die Information verwendet wird, um dem Endgerät, welches die Rundfunk-Paging-Nachricht in einem Rundfunkzeitfenster empfängt, anzuzeigen, dass das nächste Zeitfenster weiterhin überwacht werden soll, wenn es sich bei dem Wert des ersten Anzeigefeldes um einen ersten vorbestimmten Wert handelt; und dass die Information verwendet wird, um dem Endgerät, welches die Rundfunk-Paging-Nachricht in einem zugewiesenen Rundfunkzeitfenster empfängt, anzuzeigen, dass das nächste Zeitfenster weiterhin überwacht werden soll, wenn es sich bei dem Wert des zweiten Anzeigefeldes um einen zweiten vorbestimmten Wert handelt.

6. Verfahren gemäß Anspruch 5, **dadurch gekennzeichnet, dass** wenn festgestellt wird, dass die an das Endgerät zu übertragenden Rundfunknachrichten nicht vollständig in einem Zeitfenster übertragen werden können, das Übertragen, durch die Basisstation, der Rundfunknachrichten in der Mehrzahl von aufeinander folgenden Zeitfenstern, und das Übertragen, in jedem aus der Mehrzahl von Zeitfenstern, von Informationen, die anzeigen, ob das Endgerät weiterhin ein nächstes Zeitfenster überwacht, umfassen:

> wenn festgestellt wird, dass die an das Endgerät zu übertragenden Rundfunknachrichten nicht vollständig in einem Rundfunkzeitfenster übertragen werden können, Einstellen, durch die Basisstation, des ersten Anzeigefeldes in der Rundfunk-Paging-Nachricht derart, dass es sich um den ersten vorbestimmten Wert handelt, und Übertragen der Rundfunk-Paging-Nachricht an das Endgerät; und
> wenn festgestellt wird, dass die an das Endgerät zu übertragenden Rundfunknachrichten nicht vollständig in einem zugewiesenen Rundfunkzeitfenster übertragen werden können, Einstellen, durch die Basisstation, des zweiten Anzeigefeldes in der Rundfunk-Paging-Nachricht derart, dass es sich um den zweiten vorbestimmten Wert handelt, und Übertragen der Rundfunk-Paging-Nachricht an das Endgerät.

7. Verfahren gemäß Anspruch 6, **dadurch gekennzeichnet, dass** das weitere Überwachen, durch das Endgerät, des nächsten Zeitfensters gemäß den in der empfangenen Rundfunknachricht enthaltenen Anzeigefeldern so lange, bis alle Rundfunknachrichten empfangen worden sind, umfasst:

> wenn das Endgerät die Rundfunk-Paging-Nachricht in dem Rundfunkzeitfenster empfängt, Feststellen, durch das Endgerät, ob es sich bei dem Wert des in der Rundfunk-Paging-Nachricht enthaltenen ersten Anzeigefeldes um den ersten vorbestimmten Wert handelt, dann weiterhin Überwachen, durch das Endgerät, eines Zeitfensters nach dem Rundfunkzeitfenster nach der Überwachung des Rundfunkzeitfensters, und weiterhin Empfangen der von der Basisstation übertragenen Rundfunknachrichten in dem Zeitfenster nach dem Rundfunkzeitfenster; und

wenn das Endgerät die Rundfunk-Paging-Nachricht in dem zugewiesenen Zeitfenster empfängt, Feststellen, durch das Endgerät, ob es sich bei dem Wert des in der Rundfunk-Paging-Nachricht enthaltenen zweiten Anzeigefeldes um den zweiten vorbestimmten Wert handelt, dann weiterhin Überwachen, durch das Endgerät, eines Zeitfensters nach dem zugewiesenen Zeitfenster nach der Überwachung des zugewiesenen Zeitfensters, und weiterhin Empfangen der von der Basisstation übertragenen Rundfunknachrichten in dem Zeitfenster nach dem zugewiesenen Zeitfenster.

8. Cluster-Kommunikationssystem, **dadurch gekennzeichnet, dass** das System umfasst:

eine Basisstation (10), die konfiguriert ist zum, wenn festgestellt wird, dass an ein Endgerät zu übertragende Rundfunknachrichten nicht vollständig in einem Zeitfenster übertragen werden können, Übertragen der Rundfunknachrichten in einer Mehrzahl von aufeinander folgenden Zeitfenstern, und Übertragen, in jedem aus der Mehrzahl von Zeitfenstern, von Informationen, die anzeigen, ob das Endgerät weiterhin ein nächstes Zeitfenster überwacht; und

das Endgerät (20), das konfiguriert ist zum Feststellen, ob das nächste Zeitfenster weiterhin überwacht werden soll, gemäß den empfangenen Informationen, und das weiterhin konfiguriert ist zum, wenn das Ergebnis der Feststellung lautet, dass weiterhin überwacht werden soll, weiterhin Überwachen des nächsten Zeitfensters so lange, bis alle zu empfangenden Rundfunknachrichten empfangen worden sind.

9. Cluster-Kommunikationssystem gemäß Anspruch 8, **dadurch gekennzeichnet, dass** es sich bei der Information um ein erstes Anzeigefeld in einer Rundfunk-Paging-Nachricht handelt, und dass die Information verwendet wird, um dem Endgerät, welches die Rundfunk-Paging-Nachricht in einem Rundfunkzeitfenster empfängt, anzuzeigen, dass das nächste Zeitfenster weiterhin überwacht werden soll, wenn es sich bei dem Wert des ersten Anzeigefeldes um einen vorbestimmten Wert handelt.

10. Cluster-Kommunikationssystem gemäß Anspruch 9, **dadurch gekennzeichnet, dass:**

die Basisstation umfasst: ein Einstellungsmodul (101), das konfiguriert ist zum Einstellen des ersten Anzeigefeldes in der Rundfunk-Paging-Nachricht derart, dass es sich um den vorbestimmten Wert handelt, wenn festgestellt wird, dass die an das Endgerät zu übertragenden Rundfunknachrichten nicht vollständig in einem Rundfunkzeitfenster übertragen werden können; und ein Übertragungsmodul (102), das konfiguriert ist zum Übertragen der Rundfunk-Paging-Nachricht an das Endgerät; und

das Endgerät umfasst: ein Empfangsmodul (201), das konfiguriert ist zum Empfangen der Rundfunk-Paging-Nachricht in dem Rundfunkzeitfenster, und das weiterhin konfiguriert ist zum, wenn ein Feststellungsmodul feststellt, dass es sich bei dem in der Rundfunk-Paging-Nachricht enthaltenen Wert des ersten Anzeigefeldes um den vorbestimmten Wert handelt, weiterhin Überwachen eines Zeitfenster nach dem Rundfunkzeitfenster nach der Überwachung des Rundfunkzeitfensters, und weiterhin Empfangen der von der Basisstation übertragenen Rundfunknachrichten in dem Zeitfenster nach dem Rundfunkzeitfenster; und das Feststellungsmodul (202), das konfiguriert ist zum Feststellen, ob es sich bei dem Wert des in der Rundfunk-Paging-Nachricht enthaltenen ersten Anzeigefeldes um den vorbestimmten Wert handelt.

## Revendications

1. Procédé de transmission de messages radiodiffusés dans un système de communication en grappes, **caractérisé en ce que** le procédé comprend les étapes dans lesquelles :

lorsqu'il a été déterminé que les messages radiodiffusés destinés à être transmis à un terminal ne peuvent pas être transmis complètement dans un créneau temporel, une station de base transmet les messages radiodiffusés dans une pluralité de créneaux temporels continus, et transmet, dans chacun des créneaux temporels, des informations indiquant si le terminal continue de surveiller un prochain créneau temporel (S102),

le terminal détermine s'il doit continuer de surveiller le prochain créneau temporel en fonction des informations reçues (S104), et

si le résultat de détermination est de continuer la surveillance, le terminal continue de surveiller le prochain créneau temporel jusqu' à ce que tous les messages radiodiffusés destinés à être reçus soient reçus (S106).

**2.** Procédé selon la revendication 1, **caractérisé en ce que** les informations consistent en un premier champ indicateur dans un message de radiomessagerie diffusé, et servent à indiquer au terminal recevant le message de radiomessagerie diffusé dans un créneau temporel de diffusion de continuer de surveiller le prochain créneau temporel lorsque la valeur du premier champ indicateur est une valeur prédéterminée.

**3.** Procédé selon la revendication 2, **caractérisé en ce que,** lorsqu'il a été déterminé que les messages radiodiffusés destinés à être transmis au terminal ne peuvent pas être transmis complètement dans un créneau temporel, la station de base transmet les messages radiodiffusés dans la pluralité de créneaux temporels continus, et **en ce que** la transmission, dans chacun des créneaux temporels, des informations indiquant si le terminal continue de surveiller le prochain créneau temporel comprend :

le réglage, par la station de base, du premier champ indicateur dans le message de radiomessagerie diffusé de manière qu'il corresponde à la valeur prédéterminée lorsqu'il a été déterminé que les messages radiodiffusés destinés à être transmis au terminal ne peuvent pas être transmis complètement dans un créneau temporel de diffusion, et
la transmission, par la station de base, auprès du terminal, du message de radiomessagerie diffusé.

**4.** Procédé selon la revendication 3, **caractérisé en ce que,** si le résultat de détermination est de continuer la surveillance, la continuation de la surveillance du prochain créneau temporel par le terminal jusqu'à ce que tous les messages radiodiffusés destinés à être reçus soient reçus comprend :

la réception, par le terminal, du message de radiomessagerie diffusé dans le créneau temporel de diffusion,
la détermination, par le terminal, que la valeur du premier champ indicateur portée par dans le message de radiomessagerie diffusé correspond à la valeur prédéterminée, et
la continuation de la surveillance, par le terminal, d'un créneau temporel suivant le créneau temporel de diffusion après qu'il a surveillé le créneau temporel de diffusion, et la continuation de la réception des messages radiodiffusés transmis par la station de base dans le créneau temporel suivant le créneau temporel de diffusion.

**5.** Procédé selon la revendication 1, **caractérisé en ce que** les informations consistent en un premier champ indicateur et un deuxième champ indicateur dans un message de radiomessagerie diffusé, et servent à indiquer au terminal recevant le message de radiomessagerie diffusé dans un créneau temporel de diffusion de continuer de surveiller le prochain créneau temporel lorsque la valeur du premier champ indicateur correspond à une première valeur prédéterminée ; et servent à indiquer au terminal recevant le message de radiomessagerie diffusé dans un créneau temporel alloué de continuer de surveiller le prochain créneau temporel lorsque la valeur du deuxième champ indicateur correspond à une deuxième valeur prédéterminée.

**6.** Procédé selon la revendication 5, **caractérisé en ce que,** lorsqu'il a été déterminé que les messages radiodiffusés destinés à être transmis au terminal ne peuvent pas être transmis complètement dans un créneau temporel, la station de base transmet les messages radiodiffusés dans la pluralité de créneaux temporels continus, et la transmission, dans chacun des créneaux temporels, des informations indiquant si le terminal continue de surveiller le prochain créneau temporel comprend :

lorsqu'il a été déterminé que les messages radiodiffusés destinés à être transmis au terminal ne peuvent pas être transmis complètement dans un créneau temporel de diffusion, le réglage, par la station de base, du premier champ indicateur dans le message de radiomessagerie diffusé de manière qu'il corresponde à la première valeur prédéterminée, et la transmission, auprès du terminal, du message de radiomessagerie diffusé, et
lorsqu'il a été déterminé que les messages radiodiffusés destinés à être transmis au terminal ne peuvent pas être transmis complètement dans un créneau temporel alloué, le réglage, par la station de base, du deuxième champ indicateur dans le message de radiomessagerie diffusé de manière qu'il corresponde à la deuxième valeur prédéterminée, et la transmission, auprès du terminal, du message de radiomessagerie diffusé.

**7.** Procédé selon la revendication 6, **caractérisé en ce que** la continuation de la surveillance du prochain créneau temporel par le terminal, conformément aux champs indicateurs du message diffusé reçu, jusqu'à ce que tous les messages radiodiffusés soient reçus, comprend :

lorsque le terminal reçoit le message de radiomessagerie diffusé dans le créneau temporel de diffusion, la détermination, par le terminal, que la valeur du premier champ indicateur porté dans le message de radiomessagerie diffusé correspond à la première valeur prédéterminée, puis la continuation, par le terminal, de la surveillance d'un créneau temporel suivant le créneau temporel de diffusion après qu'il a surveillé le créneau temporel de diffusion, et la continuation de la réception des messages radiodiffusés transmis par la station de base dans le créneau temporel suivant le créneau temporel de diffusion, et

lorsque le terminal reçoit le message de radiomessagerie diffusé dans le créneau temporel alloué, la détermination, par le terminal, de la valeur du deuxième champ indicateur porté dans le message de radiomessagerie diffusé correspondant à la deuxième valeur prédéterminée, puis la continuation, par le terminal, de la surveillance d'un créneau temporel suivant le créneau temporel alloué après qu'il a surveillé le créneau temporel alloué, et la continuation de la réception des messages radiodiffusés transmis par la station de base dans le créneau temporel suivant le créneau temporel alloué.

8. Système de communication en grappes, **caractérisé en ce qu'**il comprend :

une station de base (10), conçue pour, lorsqu'il a été déterminé que les messages radiodiffusés destinés à être transmis à un terminal ne peuvent pas être transmis complètement dans un créneau temporel, transmettre les messages radiodiffusés dans une pluralité de créneaux temporels continus, et transmettre, dans chacun des créneaux temporels, des informations indiquant si le terminal continue de surveiller un prochain créneau temporel, et

le terminal (20), conçu pour déterminer s'il doit continuer de surveiller le prochain créneau temporel en fonction des informations reçues, et conçu en outre pour, si le résultat de détermination est de continuer la surveillance, continuer de surveiller le prochain créneau temporel jusqu'à ce que tous les messages radiodiffusés destinés à être reçus soient reçus.

9. Système de communication en grappes selon la revendication 8, **caractérisé en ce que** les informations consistent en un premier champ indicateur dans un message de radiomessagerie diffusé, et servent à indiquer au terminal recevant le message de radiomessagerie diffusé dans un créneau temporel de diffusion de continuer de surveiller le prochain créneau temporel lorsque la valeur du premier champ indicateur est une valeur prédéterminée.

10. Système de communication en grappes selon la revendication 9, **caractérisé en ce que**
la station de base comprend : un module de réglage (101), conçu pour régler le premier champ indicateur dans le message de radiomessagerie diffusé de manière qu'il corresponde à la valeur prédéterminée lorsqu'il a été déterminé que les messages radiodiffusés destinés à être transmis au terminal ne peuvent pas être transmis complètement dans un créneau temporel de diffusion ; et un module de transmission (102), conçu pour transmettre au terminal le message de radiomessagerie diffusé, et

le terminal comprend : un module de réception (201), conçu pour recevoir le message de radiomessagerie diffusé dans le créneau temporel de diffusion, et conçu en outre pour, lorsqu'un module de détermination a déterminé que la valeur du premier champ indicateur porté dans le message de radiomessagerie diffusé correspond à la valeur prédéterminée, continuer de surveiller un créneau temporel suivant le créneau temporel de diffusion après qu'il a surveillé le créneau temporel de diffusion, et continuer de recevoir les messages radiodiffusés transmis par la station de base dans le créneau temporel suivant le créneau temporel de diffusion, et le module de détermination (202), conçu pour déterminer si la valeur du premier champ indicateur porté dans le message de radiomessagerie diffusé correspond à la valeur prédéterminée.

When it is determined that broadcast messages to be transmitted to terminal cannot be transmitted completely in one time slot, base station transmits the broadcast messages in a plurality of continuous time slots, and transmits in each time slot of the plurality of time slots information indicating whether the terminal continues to monitor next time slot.

S102

The terminal determines whether to continue to monitor the next time slot according to the information received.

S104

If a determination result is to continue to monitor, the terminal continues to monitor the next time slot till all the broadcast messages to be received are received.

S106

**Fig. 1**

Setting Module
**101**

Transmitting Module
**102**

Base Station 10

Receiving Module
**201**

Determination module
**202**

Terminal 20

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007039494 A
- US 2007201413 A